# EUROPEAN PATENT APPLICATION

(11) **EP 3 726 699 A1**
(43) Date of publication of application: **21.10.2020**
(21) Application number: 18889379.6
(22) Date of filing: 15.08.2018
(51) Int. Cl.: H02J 9/06

(54) **STARTING POWER SUPPLY DEVICE AND METHOD FOR MOBILE CHARGING VEHICLE**

(30) Priority: 14.12.2017 CN 201711342316
(71) Applicant: Nio Co., Ltd., Shanghai 201804 (CN)
(72) Inventor: GAN, Yinhua, Shanghai 201804 (CN); WU, Guangtao, Shanghai 201804 (CN)
(74) Representative: Gille Hrabal
(86) International application number: PCT/CN2018/100675
(87) International publication number: WO 2019/114304

(57) **Abstract**

The invention relates to a power supply starting device and method for a mobile charging vehicle. The device comprises: a lead-acid battery power supply circuit, an energy storage battery power supply circuit, and a load control unit, wherein the lead-acid battery power supply circuit and the energy storage battery power supply circuit are both connected to the load control unit and configured to supply power to the load control unit. Power supply starting for the mobile charging vehicle is divided into a first starting phase and a second starting phase. In the first starting phase, the lead-acid battery power supply circuit supplies power to the load control unit, and the load control unit controls starting of the energy storage battery power supply circuit. In the second starting phase, a power supply circuit of the load control unit is switched from the lead-acid battery power supply circuit to the energy storage battery power supply circuit. According to the invention, when the mobile charging vehicle provides an external service, a power supply voltage can be switched smoothly during a process in which switching from a lead-acid battery to an energy storage battery is performed for starting and steady-state power supplying for a system load, a controller, and the like, thereby improving the safety and reliability of the entire charging vehicle providing the external service.

## Description

### Technical Field

The invention relates to the technical field of electric vehicle charging, and in particular, to a power supply starting device and method for a mobile charging vehicle.

### Background Art

Mobile charging vehicles can charge electric vehicles within urban areas in emergency situations to improve the convenience of charging and enhance the experience of using electric vehicles. Main energy sources of the mobile charging vehicle comprise an onboard lead-acid battery and an energy storage battery for an external service, and further comprise a power battery if the mobile charging vehicle is an electric vehicle. When the mobile charging vehicle provides a service (energy supplement or charging), a specified amount of energy is required to start an entire system. Both the power battery and the energy storage battery require additional power supply during starting to make a BMS thereof work, and then can output power. As a result, the power battery and the energy storage battery cannot be used as a start power supply of the system. Therefore, the onboard lead-acid battery is the start power supply of the system. However, a capacity of the lead-acid battery is limited. During the service of the mobile charging vehicle, energy is not enough to ensure power supplying for controlling, electric, and a system of the mobile charging vehicle. In addition, as energy of the lead-acid battery decreases, a voltage value thereof also decreases. When the voltage value drops to a specified level, the voltage value is lower than under-voltage points of a system load and controlling, causing power supply of the entire system to collapse. Therefore, the onboard lead-acid battery cannot serve as a power supply in a steady state. Because the energy storage battery has much more energy than that of the lead-acid battery, the energy storage battery serves as an energy source of steady-state power supplying for the system load and the controlling.

It can be learned that, when the mobile charging vehicle provides an external service, how to smoothly switch a power supply voltage, without voltage overshooting and excessive voltage dropping so as to ensure safe and reliable starting of the entire system, during the process in which switching from the lead-acid battery to the energy storage battery is performed for starting and steady-state power supplying for the system load and the controlling is an urgent technical problem to be resolved.

### Summary of the Invention

The technical problem to be resolved by the invention is to provide a power supply starting device and method for a mobile charging vehicle, so that when the mobile charging vehicle provides an external service, a power supply voltage can be switched smoothly during a process in which switching from a lead-acid battery to an energy storage battery is, performed for starting and steady-state power supplying for a system load, a controller, and the like, thereby improving the safety and reliability of the entire charging vehicle providing the external service.

In order to resolve the foregoing technical problems, the invention provides a power supply starting device for a mobile charging vehicle, which comprises:
a lead-acid battery power supply circuit, an energy storage battery power supply circuit, and a load control unit, wherein the lead-acid battery power supply circuit and the energy storage battery power supply circuit are both connected to the load control unit and configured to supply power to the load control unit;
power supply starting for the mobile charging vehicle is divided into a first starting phase and a second starting phase;
in the first starting phase, the lead-acid battery power supply circuit supplies power to the load control unit, and the load control unit controls starting of the energy storage battery power supply circuit; and
in the second starting phase, a power supply circuit of the load control unit is switched from the lead-acid battery power supply circuit to the energy storage battery power supply circuit.

Further, the lead-acid battery power supply circuit comprises a lead-acid battery and a first protection diode, wherein a positive electrode of the lead-acid battery is connected to a positive electrode of the first protection diode, and a negative electrode of the lead-acid battery and a negative electrode of the first protection diode are both connected to the load control unit.

Further, the energy storage battery power supply circuit comprises an energy storage battery, a DC/DC converter, and a second protection diode, wherein input terminals of the DC/DC converter are connected to a positive electrode and a negative electrode of the energy storage battery, one output terminal of the DC/DC converter is connected to a positive electrode of the second protection diode, and the other output terminal is connected to the load control unit; and a negative electrode of the second protection diode is connected to the load control unit.

Further, the load control unit is further configured to perform system self-checking, and start the energy storage battery power supply circuit after the self-checking succeeds.

Further, the load control unit starts the energy storage battery power supply circuit by controlling starting of the DC/DC converter.

Further, the load control unit comprises an electrical load and a controller of the charging vehicle.

Further, the power supply starting device further comprises a normally closed contact relay, and the normally closed contact relay comprises a coil and normally closed contacts, wherein
one end of the coil is connected to the positive electrode of the second protection diode and one end of the DC/DC converter, and the other end of the coil is connected to another end of the DC/DC converter and the load control unit; and
there are two normally closed contacts: a first normally closed contact and a second normally closed contact, one end of the first normally closed contact being connected to the negative electrode of the first protection diode, and the other end being connected to the load control unit; and one end of the second normally closed contact being connected to the negative electrode of the lead-acid battery, and the other end being connected to the load control unit.

Further, the lead-acid battery power supply circuit further comprises a starting switch configured to close the lead-acid battery power supply circuit.

A power supply starting method for a mobile charging vehicle is provided, comprising:
closing a lead-acid battery power supply circuit to enter a first starting phase, the lead-acid battery power supply circuit supplying power to a load control unit;
sending, by the load control unit, a starting instruction to an energy storage battery power supply circuit to start the energy storage battery power supply circuit, so as to enter a second starting phase; and
turning off the lead-acid battery power supply circuit when a continuously increasing output voltage of the energy storage battery power supply circuit is greater than an output voltage of the lead-acid battery power supply circuit, a power supply circuit of the load control unit being switched from the lead-acid battery power supply circuit to the energy storage battery power supply circuit.

Further, the lead-acid battery power supply circuit comprises a lead-acid battery and a first protection diode, wherein a positive electrode of the lead-acid battery is connected to a positive electrode of the first protection diode, and a negative electrode of the lead-acid battery and a negative electrode of the first protection diode are both connected to the load control unit.

Further, the energy storage battery power supply circuit comprises an energy storage battery, a DC/DC converter, and a second protection diode, wherein input terminals of the DC/DC converter are connected to a positive electrode and a negative electrode of the energy storage battery, one output terminal of the DC/DC converter is connected to a positive electrode of the second protection diode, and the other output terminal is connected to the load control unit; and a negative electrode of the second protection diode is connected to the load control unit.

Further, the method further comprises: performing, by the load control unit, system self-checking, and starting the energy storage battery power supply circuit after the self-checking succeeds.

Further, the load control unit starts the energy storage battery power supply circuit by controlling starting of the DC/DC converter.

Further, the power supply starting device further comprises a normally closed contact relay, and the normally closed contact relay comprises a coil and normally closed contacts, wherein
one end of the coil is connected to the positive electrode of the second protection diode and one end of the DC/DC converter, and the other end of the coil is connected to another end of the DC/DC converter and the load control unit; and
there are two normally closed contacts: a first normally closed contact and a second normally closed contact, one end of the first normally closed contact being connected to the negative electrode of the first protection diode, and the other end being connected to the load control unit; and one end of the second normally closed contact being connected to the negative electrode of the lead-acid battery, and the other end being connected to the load control unit.

Further, the second starting phase further comprises:
setting an output voltage of the lead-acid battery power supply circuit to V₀, a power supply voltage received by the load control unit to V₁, and an output voltage of the energy storage battery power supply circuit to V₂, after the energy storage battery power supply unit is started, the DC/DC converter supplying power to the coil, a voltage of the coil gradually rising, and the normally closed contacts being opened when the voltage reaches an operating voltage of the normally closed contact relay, and after the normally closed contacts are opened, a change of V₁ being divided into the following two cases:
case 1: if V₂ is greater than or equal to V₀ before the normally closed contacts are opened, when V₂ is greater than V₀, the first protection diode is turned off, the second protection diode is turned on, the voltage V₁ drops and then is charged by the DC/DC converter, and V₁ changes with V₂ until V₁=V₂; and after the normally closed contacts are opened, V₁ is still equal to V₂, and the power supply circuit of the load control unit is switched from the lead-acid battery power supply circuit to the energy storage battery power supply circuit; and
case 2: if V₂ is less than V₀ when the normally closed contacts are opened, the voltage V₁ drops after the normally closed contacts are opened, and when V₁ is less than V₂, the second protection diode is turned on, V₁ is charged by the DC/DC converter and rises until V₁=V₂, and the power supply circuit of the load control unit is switched from the lead-acid battery power supply circuit to the energy storage battery power supply circuit.

Further, a dropping range of V₁ is within 20% of V₁.

According to a further aspect of the invention, a controller is provided, which comprises a memory and a processor, wherein the memory stores a computer program that, when executed by the processor, is capable of implementing the steps of the method.

According to a further aspect of the invention, a computer readable storage medium for storing computer instructions is provided, wherein the instructions, when executed by a computer or a processor, implement the steps of the method.

The invention has obvious advantages and beneficial effects as compared with the prior art. By means of the above technical solutions, a power supply starting device and method for a mobile charging vehicle of the invention can achieve considerable technical progress and practicality, has a wide range of industrial utility value, and has at least the following advantages.

According to the invention, there are two starting phases when the mobile charging vehicle starts an operating service. In the first starting phase, the lead-acid battery supplies power to the load control unit 3, and in the second starting phase, the lead-acid battery is smoothly switched to the energy storage battery in the vehicle for power supply. Therefore, the power supply switching process is seamless switching and has fast response, and a drop in the power supply voltage is small, so that starting of the mobile charging vehicle is reliable and stable. When the mobile charging vehicle provides a steady-state service, the energy storage battery is used for power supply, so as to ensure that the mobile charging vehicle does not encounter a power failure during the service, thereby greatly improving the safety and reliability of the service of the mobile charging vehicle.

The description above is only summary of the technical solutions of the invention. In order to understand the technical means of the invention more clearly for implementation according to the contents of the specification, and in order to make the above and other objectives, features and advantages of the invention more apparent and easy to be understood, preferred embodiments are especially taken as examples in conjunction with the accompanying drawings, and the detailed description is as follows.

### Brief Description of the Drawings

FIG. 1 is a schematic diagram of a power supply starting device for a mobile charging vehicle according to an embodiment of the invention.
FIG. 2 is a circuit diagram of a power supply starting device for a mobile charging vehicle according to an embodiment of the invention.
FIG. 3 is a power supply starting voltage waveform diagram of the power supply starting device for the mobile charging vehicle shown in FIG. 2.
FIG. 4 is a circuit diagram of a power supply starting device for a mobile charging vehicle according to a further embodiment of the invention.
FIG. 5 is a power supply starting voltage waveform diagram in case 1 of the power supply starting device for the mobile charging vehicle shown in FIG. 4.
FIG. 6 is a power supply starting voltage waveform diagram in case 2 of the power supply starting device for the mobile charging vehicle shown in FIG. 4.
FIG. 7 is a schematic diagram of a power supply starting method for a mobile charging vehicle according to an embodiment of the invention.

### Detailed Description of Embodiments

In order to further illustrate the technical means used to achieve the intended purpose of the invention and the technical effects thereof, the implementation of a power supply starting device and method for a mobile charging vehicle proposed in the invention and the effects thereof are described in detail hereinafter in conjunction with the accompanying drawings and the preferred embodiments.

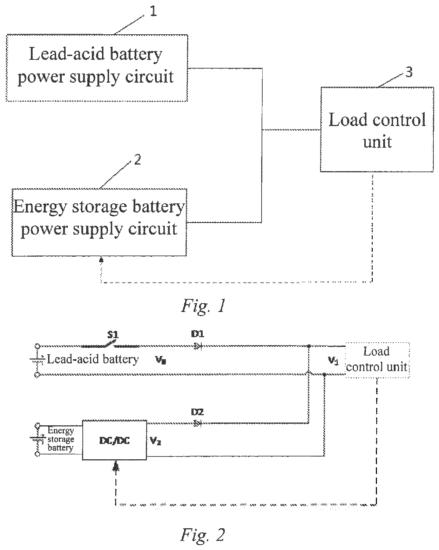

An embodiment of the invention provides a power supply starting device for a mobile charging vehicle. As shown in FIG. 1, the device comprises: a lead-acid battery power supply circuit 1, an energy storage battery power supply circuit 2, and a load control unit 3, wherein the lead-acid battery power supply circuit 1 and the energy storage battery power supply circuit 2 are both connected to the load control unit 3 and configured to supply power to the load control unit 3.

Power supply starting for the mobile charging vehicle is divided into a first starting phase and a second starting phase. In the first starting phase, the lead-acid battery power supply circuit 1 supplies power to the load control unit 3, and after the load control unit 3 is powered on, the energy storage battery power supply circuit 2 is controlled to start, thereby entering the second starting phase. In the second starting phase, a power supply circuit of the load control unit 3 is switched from the lead-acid battery power supply circuit 1 to the energy storage battery power supply circuit 2. After the foregoing two starting phases, a power supply of the mobile charging vehicle during an operating service is switched from a lead-acid battery to an energy storage battery, and the energy storage battery supplies power when the operating service is in a steady state, to ensure that the mobile charging vehicle does not encounter a power failure during the service, thereby greatly improving system safety and reliability.

In order to further improve the safety and reliability of the power supply of the mobile charging vehicle, after the load control unit 3 is powered on, system self-checking may be performed first, and after the self-checking succeeds, the energy storage battery power supply circuit 2 is controlled to start. The load control unit 3 comprises an electrical load, a controller, and the like of the charging vehicle.

Description is performed below through two specific embodiments:

### Embodiment 1

As shown in FIG. 2, the lead-acid battery power supply circuit 1 comprises a lead-acid battery and a first protection diode D1, wherein a positive electrode of the lead-acid battery is connected to a positive electrode of the first protection diode D1, and a negative electrode of the lead-acid battery and a negative electrode of the first protection diode D1 are both connected to the load control unit 3. An output voltage of the lead-acid battery power supply circuit 1 is set to V₀ and is equal to an output voltage of the lead-acid battery, and a power supply voltage received by the load control unit 3 is set to V₁. The lead-acid battery power supply circuit 1 may further comprise a starting switch S1, and the lead-acid battery power supply circuit 1 may be started by closing the starting switch S1.

The energy storage battery power supply circuit 2 comprises an energy storage battery, a DC/DC converter (a DC-to-DC converter is a DC conversion device that converts a basic DC power supply into other voltage types), and a second protection diode D2, wherein input terminals of the DC/DC converter are connected to a positive electrode and a negative electrode of the energy storage battery, one output terminal of the DC/DC converter is connected to a positive electrode of the second protection diode D2, and the other output terminal is connected to the load control unit 3. A negative electrode of the second protection diode D2 is connected to the load control unit 3. An output voltage of the energy storage battery power supply circuit 2 is set to V₂ and is equal to an output voltage of the DC/DC converter. The load control unit 3 can start the energy storage battery power supply circuit 2 by controlling starting of the DC/DC converter.

Both the first protection diode D1 and the second protection diode D2 can prevent voltage backflow. That is, when a voltage at the negative electrode of the first protection diode D1 or the second protection diode D2 is greater than a voltage at the positive electrode, the circuit is turned off, so that the voltage is prevented from flowing back to the lead-acid battery or the energy storage battery, thereby effectively protecting the lead-acid battery, the energy storage battery, and the entire circuit.

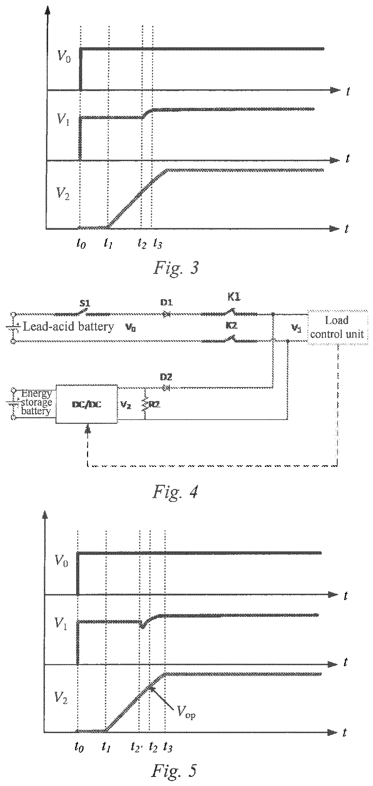

Based on the circuit structure shown in FIG. 2, during a starting process of the mobile charging vehicle, a schematic diagram of V₀, V₁, and V₂ changing with time is shown in FIG. 3.

The switch S1 is closed, and the lead-acid battery supplies power to the load control unit 3 after passing through the first protection diode D1, which corresponds to the moment t₀-t₁ in FIG. 3, V₁=V₀, and this phase is the first starting phase.

After being powered on, the load control unit 3 first performs system self-checking, and sends a starting instruction to the DC/DC converter of the energy storage battery power supply circuit 2 after the self-checking succeeds, to start the energy storage battery power supply circuit 2, so as to enter the second starting phase.

The energy storage battery power supply circuit 2 outputs a voltage of the energy storage battery through the DC/DC converter and the diode D2, and the voltage V₂ starts to rise, which corresponds to the moment t₁ in FIG. 3. When V₂ rises until V₂>V₀, as shown at the moment t₂ in FIG. 3, the first protection diode D1 is turned off, the second protection diode D2 is turned on, and V₁ quickly rises with the rise of V₂ until V₁=V₂ finally. Through the above process, power supply of the mobile charging vehicle is seamlessly switched from the lead-acid battery to the energy storage battery.

### Embodiment 2

Based on the embodiment shown in FIG. 3, a normally closed contact relay is further comprised in Embodiment 2. The normally closed contact relay comprises a coil R2 and normally closed contacts, wherein one end of the coil R2 is connected to the positive electrode of the second protection diode D2 and one end of the DC/DC converter, and the other end of the coil R2 is connected to another end of the DC/DC converter and the load control unit 3.

There are two normally closed contacts: a first normally closed contact K1 and a second normally closed contact K2. One end of the first normally closed contact K1 is connected to the negative electrode of the first protection diode D1, and the other end is connected to the load control unit 3. One end of the second normally closed contact K2 is connected to the negative electrode of the lead-acid battery, and the other end is connected to the load control unit 3.

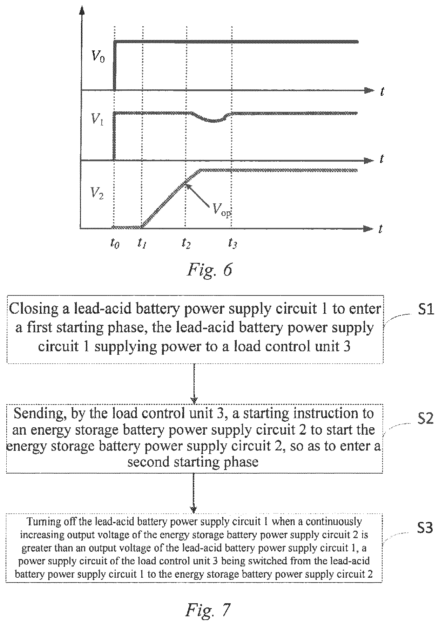

Based on the circuit structure shown in FIG. 4, during a starting process of the mobile charging vehicle, a schematic diagram of V₀, V₁, and V₂ changing with time is shown in FIG. 5 and FIG. 6.

The switch S1 is closed, and the lead-acid battery supplies power to the load control unit 3 of the system after passing through the diode D1 and the first normally closed contact K1, which corresponds to the moment t₀-t₁ in FIG. 5 and FIG. 6, V₁=V₀ and this phase is the first starting phase.

After being powered on, the load control unit 3 first performs system self-checking, and sends a starting instruction to the DC/DC converter of the energy storage battery power supply circuit 2 after the self-checking succeeds, to start the energy storage battery power supply circuit 2, so as to enter the second starting phase.

The energy storage battery power supply circuit 2 outputs a voltage of the energy storage battery through the DC/DC converter and the diode D2, and the voltage V₂ starts to rise, which corresponds to the moment t₁ in FIG. 5 and FIG. 6. The DC/DC converter supplies power to the coil R2 of the relay at the same time. After the coil R2 is powered on, assuming that the voltage V₂ reaches an operating voltage Vₒₚ of the relay at the moment t₂, the normally closed contacts K1 and K2 of the relay are opened. According to a difference between the voltage V₂ and the voltage V₀ before the normally closed contacts K1 and K2 are opened, there are two cases in FIG. 5 and FIG. 6.
Case 1: If V₂ rises to be greater than or equal to V₀ before the normally closed contacts K1 and K2 are opened, assuming V₂=V₀ at the moment t₂, in FIG. 5, the first protection diode D1 is turned off, the second protection diode D2 is turned on, and V₁ has a small voltage drop starting from the moment t₂, a voltage dropping range of V₁ being controlled within 20% of V₁. Then V₁ is quickly charged by the DC/DC converter, and V₁ quickly rises with V₂ until V₁=V₂. When the normally closed contacts K1 and K2 are opened at the moment t₂, V₁ is still equal to V₂. A power supply circuit of the load control unit 3 is switched from the lead-acid battery power supply circuit 1 to the energy storage battery power supply circuit 2.
Case 2: If V₂ is still less than V₀ when the normally closed contacts K1 and K2 are opened, the first protection diode D1 and the second protection diode D2 keep unchanged, and then V₁ is still equal to V₀. After the normally closed contacts are opened at the moment t₂, V₁ has a small voltage drop, a voltage dropping range of V₁ being controlled within 20% of V₁. When V₁ drops to be less than V₂, the second protection diode D2 is turned on, and V₁ is charged and rises until V₁=V₂. Finally, switching from the lead-acid battery to the energy storage battery is performed for power supplying for a system load and controlling, and the power supply circuit of the load control unit 3 is switched from the lead-acid battery power supply circuit 1 to the energy storage battery power supply circuit 2.

According to the power supply starting device for the mobile charging vehicle in the invention, there are two starting phases when the mobile charging vehicle starts an operating service. In the first starting phase, the lead-acid battery supplies power to the load control unit 3, and in the second starting phase, the lead-acid battery is smoothly switched to the energy storage battery in the vehicle for power supply. Therefore, the power supply switching process is seamless switching and has fast response, and a drop in the power supply voltage is small, so that starting of the mobile charging vehicle is reliable and stable. When the mobile charging vehicle provides a steady-state service, the energy storage battery is used for power supply, so as to ensure that the mobile charging vehicle does not encounter a power failure during the service, thereby greatly improving the safety and reliability of the service of the mobile charging vehicle.

An embodiment of the invention further provides a power supply starting method for a mobile charging vehicle. As shown in FIG. 7, the method comprises the following steps.

Step S1: closing a lead-acid battery power supply circuit 1 to enter a first starting phase, the lead-acid battery power supply circuit 1 supplying power to a load control unit 3.

Step S2: sending, by the load control unit 3, a starting instruction to an energy storage battery power supply circuit 2 to start the energy storage battery power supply circuit 2, so as to enter a second starting phase.

In order to improve the safety and reliability of power supply of the mobile charging vehicle, step S2 further comprises: first performing, by the load control unit 3, system self-checking after being powered on, and after the self-checking succeeds, controlling the energy storage battery power supply circuit 2 to start.

Step S3: turning off the lead-acid battery power supply circuit 1 when a continuously increasing output voltage of the energy storage battery power supply circuit 2 is greater than an output voltage of the lead-acid battery power supply circuit 1, a power supply circuit of the load control unit 3 being switched from the lead-acid battery power supply circuit 1 to the energy storage battery power supply circuit 2.

The load control unit 3 comprises an electrical load, a controller, and the like of the charging vehicle.

After the foregoing two starting phases, a power supply of the mobile charging vehicle during an operating service is switched from a lead-acid battery to an energy storage battery, and the energy storage battery supplies power when the operating service is in a steady state, to ensure that the mobile charging vehicle does not encounter a power failure during the service, thereby greatly improving system safety and reliability.

The following describes in detail the power supply starting method for the mobile charging vehicle based on two different circuit composition examples:

### Embodiment 3

As shown in FIG. 2, the lead-acid battery power supply circuit 1 comprises a lead-acid battery and a first protection diode D1, wherein a positive electrode of the lead-acid battery is connected to a positive electrode of the first protection diode D1, and a negative electrode of the lead-acid battery and a negative electrode of the first protection diode D1 are both connected to the load control unit 3. An output voltage of the lead-acid battery power supply circuit 1 is set to V₀ and is equal to an output voltage of the lead-acid battery, and a power supply voltage received by the load control unit 3 is set to V₁. The lead-acid battery power supply circuit 1 may further comprise a starting switch S1, and the lead-acid battery power supply circuit 1 may be started by closing the starting switch S1.

The energy storage battery power supply circuit 2 comprises an energy storage battery, a DC/DC converter, and a second protection diode D2, wherein input terminals of the DC/DC converter are connected to a positive electrode and a negative electrode of the energy storage battery, one output terminal of the DC/DC converter is connected to a positive electrode of the second protection diode D2, and the other output terminal is connected to the load control unit 3. A negative electrode of the second protection diode D2 is connected to the load control unit 3. An output voltage of the energy storage battery power supply circuit 2 is set to V₂ and is equal to an output voltage of the DC/DC converter. The load control unit 3 can start the energy storage battery power supply circuit 2 by controlling starting of the DC/DC converter.

Both the first protection diode D1 and the second protection diode D2 can prevent voltage backflow. That is, when a voltage at the negative electrode of the first protection diode D1 or the second protection diode D2 is greater than a voltage at the positive electrode, the circuit is turned off, so that the voltage is prevented from flowing back to the lead-acid battery or the energy storage battery, thereby effectively protecting the lead-acid battery, the energy storage battery, and the entire circuit.

Based on the circuit structure shown in FIG. 2, during a starting process of the mobile charging vehicle, a schematic diagram of V₀, V₁, and V₂ changing with time is shown in FIG. 3.

Step S1 specifically comprises: closing the switch S1, and supplying, by the lead-acid battery, power to the load control unit 3 after passing through the first protection diode D1, which corresponds to the moment t₀-t₁ in FIG. 3, V₁=V₀, and this phase being the first starting phase.

Step S2 specifically comprises: first performing, by the load control unit 3, system self-checking after being powered on, and sending a starting instruction to the DC/DC converter of the energy storage battery power supply circuit 2 after the self-checking succeeds, to start the energy storage battery power supply circuit 2, so as to enter the second starting phase.

Step S3 specifically comprises: outputting, by the energy storage battery power supply circuit 2, a voltage of the energy storage battery through the DC/DC converter and the diode D2, the voltage V₂ starting to rise, which corresponds to the moment t₁ in FIG. 3; and when V₂ rises until V₂>V₀, as shown at the moment t₂ in FIG. 3, turning off the first protection diode D1, and turning on the second protection diode D2, V₁ quickly rising with the rise of V₂ until V₁=V₂ finally, thereby implementing seamless switching from the lead-acid battery to the energy storage battery for power supply of the mobile charging vehicle through the above process.

### Embodiment 4

Based on the embodiment shown in FIG. 3, a circuit structure in Embodiment 4 further comprises a normally closed contact relay. The normally closed contact relay comprises a coil R2 and normally closed contacts, wherein one end of the coil R2 is connected to the positive electrode of the second protection diode D2 and one end of the DC/DC converter, and the other end of the coil R2 is connected to another end of the DC/DC converter and the load control unit 3.

There are two normally closed contacts: a first normally closed contact K1 and a second normally closed contact K2. One end of the first normally closed contact K1 is connected to the negative electrode of the first protection diode D1, and the other end is connected to the load control unit 3. One end of the second normally closed contact K2 is connected to the negative electrode of the lead-acid battery, and the other end is connected to the load control unit 3.

Based on the circuit structure shown in FIG. 4, during a starting process of the mobile charging vehicle, a schematic diagram of V₀, V₁, and V₂ changing with time is shown in FIG. 5 and FIG. 6.

Step S1 comprises: closing the switch S1, and supplying, by the lead-acid battery, power to the load control unit 3 of the system after passing through the diode D1 and the first normally closed contact K1, which corresponds to the moment t₀-t₁ in FIG. 5 and FIG. 6, V₁=V₀, and this phase being the first starting phase.

Step S2 comprises: first performing, by the load control unit 3, system self-checking after being powered on, and sending a starting instruction to the DC/DC converter of the energy storage battery power supply circuit 2 after the self-checking succeeds, to start the energy storage battery power supply circuit 2, so as to enter the second starting phase.

Step S3 comprises: outputting, by the energy storage battery power supply circuit 2, a voltage of the energy storage battery through the DC/DC converter and the diode D2, the voltage V₂ starting to rise, which corresponds to the moment t₁ in FIG. 5 and FIG. 6; supplying, by the DC/DC converter, power to the coil R2 of the relay at the same time; and after the coil R2 is powered on, assuming that the voltage V₂ reaches an operating voltage Vₒₚ of the relay at the moment t₂, opening the normally closed contacts K1 and K2 of the relay, wherein according to a difference between the voltage V₂ and the voltage V₀ before the normally closed contacts K1 and K2 are opened, there are two cases in FIG. 5 and FIG. 6.

Case 1: If V₂ rises to be greater than or equal to V₀ before the normally closed contacts K1 and K2 are opened, assuming V₂=V₀ at the moment t₂, in FIG. 5, the first protection diode D1 is turned off, the second protection diode D2 is turned on, and V₁ has a small voltage drop starting from the moment t₂, a voltage dropping range of V₁ being controlled within 20% of V₁. Then V₁ is quickly charged by the DC/DC converter, and V₁ quickly rises with V₂ until V₁=V₂. When the normally closed contacts K1 and K2 are opened at the moment t₂, V₁ is still equal to V₂. A power supply circuit of the load control unit 3 is switched from the lead-acid battery power supply circuit 1 to the energy storage battery power supply circuit 2.

Case 2: If V₂ is still less than V₀ when the normally closed contacts K1 and K2 are opened, the first protection diode D1 and the second protection diode D2 keep unchanged, and then V₁ is still equal to V₀. After the normally closed contacts are opened at the moment t₂, V₁ has a small voltage drop, a voltage dropping range of V₁ being controlled within 20% of V₁. When V₁ drops to be less than V₂, the second protection diode D2 is turned on, and V₁ is charged and rises until V₁=V₂. Finally, switching from the lead-acid battery to the energy storage battery is performed for power supplying for a system load and controlling, and the power supply circuit of the load control unit 3 is switched from the lead-acid battery power supply circuit 1 to the energy storage battery power supply circuit 2.

According to the power supply starting method for the mobile charging vehicle in the invention, there are two starting phases when the mobile charging vehicle starts an operating service. In the first starting phase, the lead-acid battery supplies power to the load control unit 3, and in the second starting phase, the lead-acid battery is smoothly switched to the energy storage battery in the vehicle for power supply. Therefore, the power supply switching process is seamless switching and has fast response, and a drop in the power supply voltage is small, so that starting of the mobile charging vehicle is reliable and stable. When the mobile charging vehicle provides a steady-state service, the energy storage battery is used for power supply, so as to ensure that the mobile charging vehicle does not encounter a power failure during the service, thereby greatly improving the safety and reliability of the service of the mobile charging vehicle.

According to a further aspect of the invention, a controller is provided, which comprises a memory and a processor, wherein the memory stores a computer program that, when executed by the processor, is capable of implementing the steps of the method.

According to a further aspect of the invention, a computer readable storage medium for storing computer instructions is provided, wherein the instructions, when executed by a computer or a processor, implement the steps of the method.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A power supply starting device for a mobile charging vehicle, **characterized by**
comprising: a lead-acid battery power supply circuit, an energy storage battery power supply circuit, and a load control unit, wherein the lead-acid battery power supply circuit and the energy storage battery power supply circuit are both connected to the load control unit and configured to supply power to the load control unit;
power supply starting for the mobile charging vehicle is divided into a first starting phase and a second starting phase;
in the first starting phase, the lead-acid battery power supply circuit supplies power to the load control unit, and the load control unit controls starting of the energy storage battery power supply circuit; and
in the second starting phase, a power supply circuit of the load control unit is switched from the lead-acid battery power supply circuit to the energy storage battery power supply circuit.

2. The power supply starting device for the mobile charging vehicle according to claim 1, **characterized in that**
the lead-acid battery power supply circuit comprises a lead-acid battery and a first protection diode, wherein a positive electrode of the lead-acid battery is connected to a positive electrode of the first protection diode, and a negative electrode of the lead-acid battery and a negative electrode of the first protection diode are both connected to the load control unit.

3. The power supply starting device for the mobile charging vehicle according to claim 2, **characterized in that**
the energy storage battery power supply circuit comprises an energy storage battery, a DC/DC converter, and a second protection diode, wherein input terminals of the DC/DC converter are connected to a positive electrode and a negative electrode of the energy storage battery, one output terminal of the DC/DC converter is connected to a positive electrode of the second protection diode, and the other output terminal is connected to the load control unit; and a negative electrode of the second protection diode is connected to the load control unit.

4. The power supply starting device for the mobile charging vehicle according to claim 1, **characterized in that**
the load control unit is further configured to perform system self-checking, and start the energy storage battery power supply circuit after the self-checking succeeds.

5. The power supply starting device for the mobile charging vehicle according to claim 3, **characterized in that**
the load control unit starts the energy storage battery power supply circuit by controlling starting of the DC/DC converter.

6. The power supply starting device for the mobile charging vehicle according to claim 1, **characterized in that**
the load control unit comprises an electrical load and a controller of the charging vehicle.

7. The power supply starting device for the mobile charging vehicle according to claim 3, **characterized by**
further comprising a normally closed contact relay, the normally closed contact relay comprising a coil and normally closed contacts, wherein
one end of the coil is connected to the positive electrode of the second protection diode and one end of the DC/DC converter, and the other end of the coil is connected to another end of the DC/DC converter and the load control unit; and
there are two normally closed contacts: a first normally closed contact and a second normally closed contact, one end of the first normally closed contact being connected to the negative electrode of the first protection diode, and the other end being connected to the load control unit; and one end of the second normally closed contact being connected to the negative electrode of the lead-acid battery, and the other end being connected to the load control unit.

8. The power supply starting device for the mobile charging vehicle according to any of claims 1 to 7, **characterized in that**
the lead-acid battery power supply circuit further comprises a starting switch configured to close the lead-acid battery power supply circuit.

9. A power supply starting method for a mobile charging vehicle, **characterized by**
comprising:
closing a lead-acid battery power supply circuit to enter a first starting phase, the lead-acid battery power supply circuit supplying power to a load control unit;
sending, by the load control unit, a starting instruction to an energy storage battery power supply circuit to start the energy storage battery power supply circuit, so as to enter a second starting phase; and
turning off the lead-acid battery power supply circuit when a continuously increasing output voltage of the energy storage battery power supply circuit is greater than an output voltage of the lead-acid battery power supply circuit, a power supply circuit of the load control unit being switched from the lead-acid battery power supply circuit to the energy storage battery power supply circuit.

10. The power supply starting method for the mobile charging vehicle according to claim 9, **characterized in that**
the lead-acid battery power supply circuit comprises a lead-acid battery and a first protection diode, wherein a positive electrode of the lead-acid battery is connected to a positive electrode of the first protection diode, and a negative electrode of the lead-acid battery and a negative electrode of the first protection diode are both connected to the load control unit.

11. The power supply starting method for the mobile charging vehicle according to claim 10, **characterized in that**
the energy storage battery power supply circuit comprises an energy storage battery, a DC/DC converter, and a second protection diode, wherein input terminals of the DC/DC converter are connected to a positive electrode and a negative electrode of the energy storage battery, one output terminal of the DC/DC converter is connected to a positive electrode of the second protection diode, and the other output terminal is connected to the load control unit; and a negative electrode of the second protection diode is connected to the load control unit.

12. The power supply starting method for the mobile charging vehicle according to claim 9, **characterized by**
further comprising: performing, by the load control unit, system self-checking, and starting the energy storage battery power supply circuit after the self-checking succeeds.

13. The power supply starting method for the mobile charging vehicle according to claim 11, **characterized in that**
the load control unit starts the energy storage battery power supply circuit by controlling starting of the DC/DC converter.

14. The power supply starting method for the mobile charging vehicle according to claim 11, **characterized in that**
the power supply starting device further comprises a normally closed contact relay, and the normally closed contact relay comprises a coil and normally closed contacts, wherein
one end of the coil is connected to the positive electrode of the second protection diode and one end of the DC/DC converter, and the other end of the coil is connected to another end of the DC/DC converter and the load control unit; and
there are two normally closed contacts: a first normally closed contact and a second normally closed contact, one end of the first normally closed contact being connected to the negative electrode of the first protection diode, and the other end being connected to the load control unit; and one end of the second normally closed contact being connected to the negative electrode of the lead-acid battery, and the other end being connected to the load control unit.

15. The power supply starting method for the mobile charging vehicle according to claim 14, **characterized in that**
the second starting phase further comprises:
setting an output voltage of the lead-acid battery power supply circuit to V₀, a power supply voltage received by the load control unit to V₁, and an output voltage of the energy storage battery power supply circuit to V₂, after the energy storage battery power supply unit is started, the DC/DC converter supplying power to the coil, a voltage of the coil gradually rising, and the normally closed contacts being opened when the voltage reaches an operating voltage of the normally closed contact relay, and after the normally closed contacts are opened, a change of V₁ being divided into the following two cases:
case 1: if V₂ is greater than or equal to V₀ before the normally closed contacts are opened, when V₂ is greater than V₀, the first protection diode is turned off, the second protection diode is turned on, the voltage V₁ drops and then is charged by the DC/DC converter, and V₁ changes with V₂ until V₁=V₂; and after the normally closed contacts are opened, V₁ is still equal to V₂, and the power supply circuit of the load control unit is switched from the lead-acid battery power supply circuit to the energy storage battery power supply circuit; and
case 2: if V₂ is less than V₀ when the normally closed contacts are opened, the voltage V₁ drops after the normally closed contacts are opened, and when V₁ is less than V₂, the second protection diode is turned on, V₁ is charged by the DC/DC converter and rises until V₁=V₂, and the power supply circuit of the load control unit is switched from the lead-acid battery power supply circuit to the energy storage battery power supply circuit.

16. The power supply starting method for the mobile charging vehicle according to claim 15, **characterized in that**
a dropping range of V₁ is within 20% of V₁.

17. A controller, comprising a memory and a processor, wherein the memory stores a computer program that, when executed by the processor, is capable of implementing the steps of the method according to any of claims 9 to 16.

18. A computer readable storage medium for storing a computer program that, when executed by a computer or a processor, implements the steps of the method according to any of claims 9 to 16.
